(19) **Europäisches Patentamt / European Patent Office / Office européen des brevets**

(11) **EP 3 825 843 B1**

(12) **EUROPEAN PATENT SPECIFICATION**

(45) Date of publication and mention
of the grant of the patent:
**30.11.2022 Bulletin 2022/48**

(21) Application number: **20217329.0**

(22) Date of filing: **01.04.2020**

(51) International Patent Classification (IPC):
**G06F 9/30** (2018.01)

(52) Cooperative Patent Classification (CPC):
**G06F 9/30043; G06F 9/30036; G06F 9/30076;
G06F 9/3016; G06F 9/30192**

(54) **DATA PROCESSING METHOD AND APPARATUS, AND RELATED PRODUCT**

DATENVERARBEITUNGSVERFAHREN UND -VORRICHTUNG UND ZUGEHÖRIGES PRODUKT

PROCÉDÉ ET APPAREIL DE TRAITEMENT DE DONNÉES, ET PRODUIT ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2019 CN 201910272411
04.04.2019 CN 201910272625
04.04.2019 CN 201910272660
19.04.2019 CN 201910320091
19.04.2019 CN 201910319165
25.04.2019 CN 201910340177
25.04.2019 CN 201910341003**

(43) Date of publication of application:
**26.05.2021 Bulletin 2021/21**

(62) Document number(s) of the earlier application(s) in
accordance with Art. 76 EPC:
**20783678.4 / 3 800 547**

(73) Proprietor: **Cambricon (Xi'an) Semiconductor Co.,
Ltd.
Xi'an City, Shaanxi 710116 (CN)**

(72) Inventors:
• LIU, Shaoli
**Beijing 100190 (CN)**
• WANG, Bingrui
**Beijing 100190 (CN)**
• LI, Zhen
**Beijing 100190 (CN)**
• LIANG, Jun
**Beijing 100190 (CN)**

(74) Representative: **Huang, Liwei
Cäcilienstraße 12
40597 Düsseldorf (DE)**

(56) References cited:
**WO-A1-2018/217360      US-A1- 2014 164 735
US-A1- 2016 246 599      US-A1- 2018 365 561**

**Description**

**Technical Field**

The disclosure relates generally to the field of computer technologies, and more specifically to a data processing method and an apparatus and related products.

**Background**

With the continuous development of the AI (Artificial Intelligence) technology, it has gradually obtained wide application and worked well in the fields of image recognition, speech recognition, and natural language processing, and the like. However, as the complexity of AI algorithms is growing, the amount of data and data dimensions that need to be processed are increasing. In related arts, processors usually determine the data address by obtaining parameters of instructions, and then read and use the data according to the data address, which requires those skilled in the art to set relevant parameters for data access (such as the relationship between data and data, or data dimension and data dimension, *etc.*) when designing parameters, so as to generate instructions and transmit the instructions to the processors to complete the data access. The above-mentioned method reduces the processing efficiency of the processors. US2016246599 discloses a tile-array implementation with a hardware instruction generation unit generating instructions comprising descriptors.

**Summary**

In order to solve the technical problems, the present disclosure provides a data processing technical solution.
A first aspect of the present disclosure provides a data processing method including: when an operand of a decoded first processing instruction includes an identifier of a descriptor, obtaining content of the descriptor according to the identifier of the descriptor, where the descriptor is configured to indicate a shape of a tensor; and executing the first processing instruction according to the content of the descriptor.
A second aspect of the present disclosure provides a data processing apparatus including: a content obtaining module configured to, when an operand of a decoded first processing instruction includes the identifier of the descriptor, obtain content of a descriptor according to an identifier of the descriptor, where the descriptor is configured to indicate a shape of a tensor; and an instruction executing module configured to execute the first processing instruction according to the content of the descriptor.
A third aspect of the present disclosure provides a neural network chip including the data processing apparatus.
A fourth aspect of the present disclosure provides an electronic device including the neural network chip.
A fifth aspect of the present disclosure provides a board card including: a storage device, an interface apparatus, a control device, and the above-mentioned neural network chip. The neural network chip is connected to the storage device, the control device, and the interface apparatus respectively; the storage device is configured to store data; the interface apparatus is configured to implement data transmission between the neural network chip and an external apparatus; and the control device is configured to monitor a state of the neural network chip.
According to embodiments of the present disclosure, by introducing a descriptor indicating the shape of a tensor, the corresponding content of the descriptor can be determined when the identifier of the descriptor is included in the operand of a decoded processing instruction, and the processing instruction can be executed according to the content of the descriptor, which can reduce the complexity of data access and improve the efficiency of data access.
In order to make other features and aspects of the present disclosure clearer, a detailed description of exemplary embodiments with reference to the drawings is provided below.

**Brief Description of the Drawings**

The accompanying drawings contained in and forming part of the specification together with the specification show exemplary embodiments, features and aspects of the present disclosure and are used to explain the principles of the disclosure.

Fig. 1 shows a flowchart of a data synchronization method according to an embodiment of the present disclosure.
Fig. 2 shows a flowchart of a data synchronization method according to an embodiment of the present disclosure.
Fig. 3 shows a flowchart of a data synchronization method according to an embodiment of the present disclosure.
Fig. 4 shows a schematic diagram of a data storage space of a data synchronization method according to an embodiment of the present disclosure.
Fig. 5 shows a block diagram of a data synchronization apparatus according to an embodiment of the present disclosure.

Fig. 6 shows a block diagram of a data synchronization apparatus according to an embodiment of the present disclosure.

Fig. 7 shows a block diagram of a data synchronization apparatus according to an embodiment of the present disclosure.

Fig. 8 shows a block diagram of a board card according to an embodiment of the present disclosure.

## Detailed Description of the Embodiments

Various exemplary embodiments, features, and aspects of the present disclosure will be described in detail below with reference to the drawings. The same marks in the drawings represent the same or similar elements. Although various aspects of the embodiments are shown in the drawings, the drawings are not necessarily drawn to scale unless specifically noted.

The "exemplary" as used herein means "serving as an example, embodiment, or illustration." Any embodiment described herein as "exemplary" is not necessarily to be interpreted as superior to or better than other embodiments.

In addition, in order to better illustrate the present disclosure, a lot of specific details are given in the detailed description below. Those skilled in the art should understand that the present disclosure can be implemented without certain specific details. In some embodiments, methods, means, components, and circuits that are well known to those skilled in the art have not been described in detail in order to highlight the main idea of the present disclosure.

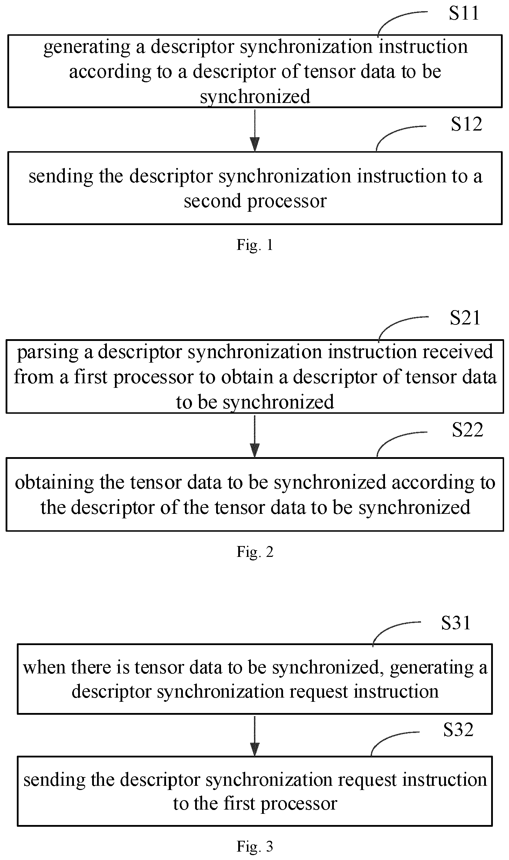

An embodiment of the present disclosure provides a data synchronization method. Fig. 1 shows a flowchart of a data synchronization method according to an embodiment of the present disclosure. The data synchronization method can be applied to a first processor, where the first processor may include a general-purpose processor (such as a CPU (central processing unit), a GPU (graphics processor)) and a dedicated processor (such as an AI processor, a scientific computing processor, or a digital signal processor, *etc.*). This disclosure does not limit the type of the first processor.

As shown in Fig. 1, the data synchronization method includes:

in a step S11, generating a descriptor synchronization instruction according to a descriptor of tensor data to be synchronized, where the descriptor synchronization instruction includes an identifier of the descriptor and/or content of the descriptor, and the descriptor is used to indicate a shape of the tensor data to be synchronized; and

in a step S12, sending the descriptor synchronization instruction to a second processor, where the descriptor synchronization instruction is used to instruct the second processor to obtain the tensor data to be synchronized according to the descriptor synchronization instruction.

For example, the tensor data to be synchronized may include N-dimensional tensor data (N is an integer greater than or equal to 0, for example, N=1, 2, or 3), where the tensor may have various forms of data composition, and the tensor may have different dimensions, for example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix},$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor. When tensor data is stored in a memory, the shape of the tensor data cannot be determined according to a data address (or storage area) of the tensor, and then related information such as the relationship between a plurality of pieces of tensor data cannot be determined, as a result, the processor is inefficient in accessing tensor data, and the data synchronization is also complicated.

In this case, a descriptor (tensor descriptor) may be set to indicate the shape of the tensor (N-dimensional tensor data), where the value of N can be determined according to a count of dimensions (orders) of the tensor data, and can also be set according to the usage of the tensor data. For example, when the value of N is 3, the tensor data is 3-dimensional tensor data, and the descriptor can be used to indicate the shape (such as offset, size, *etc.*) of the 3-dimensional tensor data in three dimensions. It should be understood that those skilled in the art can set the value of N according to actual needs, which is not limited in the present disclosure.

In a possible implementation method, the descriptor may include an identifier and content, and the identifier of the descriptor may be used to distinguish the descriptor, for example, the identifier may be used to number the descriptor and the content of the descriptor may include at least one shape parameter(such as a size of each dimension of the tensor, *etc.*) representing the shape of the tensor data, and may also include at least one address parameter (such as a base address of a datum point) representing an address of the tensor data. The present disclosure does not limit the specific parameters included in the content of the descriptor. By using the descriptor to indicate tensor data, the shape of tensor data can be represented, and related information such as the relationship among a plurality of pieces of tensor data can be determined, so as to improve the access efficiency of tensor data and reduce the complexity of data synchronization.

In a possible implementation method, during data processing, data synchronization between a plurality of processors (such as a plurality of cores of an artificial intelligence chip) may be executed, for example, an operation result of a processor A1 may be synchronized to a processor A2 as input data of another operation. In this case, a data synchronization mechanism based on the descriptor can be used to achieve data synchronization.

In a possible implementation method, the first processor is a sender for data synchronization, and the second processor is a receiver for data synchronization. When there is tensor data to be synchronized, in the step S11, the first processor may generate the descriptor synchronization instruction according to the descriptor of the tensor data, and in the step S12, the first processor may send the descriptor synchronization instruction to the second processor to be synchronized. The second processor may include a general-purpose processor (such as a CPU (central processing unit), a GPU (graphics processor)) and a dedicated processor (such as an AI processor, a scientific computing processor, or a digital signal processor, *etc.).* The type of the second processor may be the same as or different from the type of the first processor, and this disclosure does not limit the type of the second processor.

In a possible implementation method, the first processor can actively execute data synchronization on the second processor. For example, when the first processor completes an operation and obtain an operation result (tensor data), the first processor actively synchronizes data with the second processor that needs to use the operation result. In another example, the first processor may also synchronize data with the second processor in response to a synchronization request of the second processor, for example, when receiving a synchronization request instruction from the second processor, the first processor starts executing data synchronization on the second processor. The present disclosure does not limit the timing of the start of data synchronization.

In a possible implementation method, when the first processor determines that there is tensor data to be synchronized, the first processor may obtain the descriptor of the tensor data. The descriptor may be a registered (created) descriptor indicating the shape of the tensor data, or a new descriptor registered (created) according to the shape parameter of the tensor data, which is not limited in the present disclosure.

In a possible implementation method, the descriptor synchronization instruction may be generated according to the descriptor of the tensor data, and the descriptor synchronization instruction includes the identifier of the descriptor and/or the content of the descriptor. If a descriptor indicating the tensor data to be synchronized has been registered in the second processor, the descriptor synchronization instruction may only include the identifier of the descriptor (for example, when the identifier of the descriptor is TR1, the descriptor synchronization instruction is represented as Send TR1) to instruct the second processor to synchronize the tensor data according to the identifier of the descriptor (TR1). If the descriptor indicating the tensor data to be synchronized is not registered in the second processor, the descriptor synchronization instruction may include the content of the descriptor, or include both the identifier of the descriptor and the content of the descriptor to instruct the second processor to synchronize the tensor data according to the content of the descriptor. The present disclosure does not limit the specific content of the descriptor synchronization instruction.

In a possible implementation method, after the descriptor synchronization instruction is generated, the descriptor synchronization instruction may be sent to the second processor to instruct the second processor to obtain the tensor data to be synchronized according to the descriptor synchronization instruction. If the descriptor synchronization instruction includes the identifier of the descriptor, the second processor may obtain the content of the descriptor according to the identifier of the descriptor, and then obtain the tensor data indicated by the descriptor according to the content of the descriptor, thereby synchronizing the tensor data. If the descriptor synchronization instruction includes the content of the descriptor, the second processor may directly obtain the tensor data indicated by the descriptor according to the content of the descriptor, thereby synchronizing the tensor data.

According to the data synchronization method provided in the embodiment of the present disclosure, by setting a descriptor indicating the shape of tensor data, when data synchronization is needed, a descriptor synchronization instruction can be generated according to the descriptor of the tensor data to be synchronized and sent to the second processor to instruct the second processor to obtain the tensor data to be synchronized according to the descriptor synchronization instruction, thereby reducing synchronization overhead and the complexity of data synchronization, and improving the efficiency of data synchronization.

In a possible implementation method, the data synchronization method further includes: determining the descriptor of the tensor data to be synchronized according to the descriptor synchronization request instruction received from the second processor.

For example, the first processor may execute data synchronization on the second processor in response to the synchronization request of the second processor. The descriptor synchronization request instruction received from the second processor may include information of the tensor data to be synchronized, such as an identifier indicating the descriptor of the tensor data to be synchronized, data characteristics of the tensor data to be synchronized, and the like, where the data characteristics of the tensor data may include information such as the shape, source, and address of the tensor data. The present disclosure does not limit the specific content of the descriptor synchronization request instruction. According to the information in the descriptor synchronization request instruction, the first processor may determine the descriptor of the tensor data to be synchronized, and then generate the descriptor synchronization instruction.

According to the data synchronization method provided in the present disclosure, the descriptor of the tensor data to be synchronized can be determined according to the synchronization request of the second processor, so as to generate a descriptor synchronization instruction, thereby avoiding unnecessary data synchronization and improving the efficiency of data synchronization.

In a possible implementation method, the descriptor synchronization request instruction includes the identifier of the descriptor. The determining the descriptor of the tensor data to be synchronized according to the descriptor synchronization request instruction received from the second processor includes: parsing the descriptor synchronization request instruction to obtain the identifier of the descriptor; and determining the descriptor of the tensor data to be synchronized according to the identifier of the descriptor.

For example, if descriptors indicating the tensor data have been registered in both the first processor and the second processor, and the identifiers of the descriptors registered in the first processor and the second processor are the same or correspond to each other, the descriptor synchronization request instruction may include the identifiers of the descriptors, for example, when an identifier of a descriptor is TR1, the descriptor synchronization request instruction is represented as Receive TR1. The first processor may parse the descriptor synchronization request instruction received from the second processor to obtain the identifier of the descriptor, and then determine the descriptor of the tensor data to be synchronized according to the identifier of the descriptor, so as to generate the descriptor synchronization instruction.

According to the data synchronization method provided in the present disclosure, the descriptor of the tensor data to be synchronized can be determined according to the identifier of the descriptor in the request instruction, so as to achieve synchronization of the tensor data, thereby reducing the amount of data transmitted during synchronization and improving processing efficiency.

In a possible implementation method, the descriptor synchronization request instruction includes data characteristics of the tensor data to be synchronized. The determining the descriptor of the tensor data to be synchronized according to the descriptor synchronization request instruction received from the second processor includes: parsing the descriptor synchronization request instruction to obtain the data characteristics of the tensor data to be synchronized; and determining the descriptor of the tensor data to be synchronized according to the data characteristics of the tensor data to be synchronized.

For example, if a descriptor indicating the tensor data has not been registered in a second first processor; or a descriptor indicating the tensor data has been registered in the first processor, but the identifier of the descriptor registered in the second processor does not correspond to the identifier of the descriptor registered in the second processor, then the descriptor synchronization request instruction may include the data characteristics of the tensor data to be synchronized. The first processor may parse the descriptor synchronization request instruction received from the second processor to obtain the data characteristics of the tensor data to be synchronized, and then determine the tensor data to be synchronized and its descriptor according to the data characteristics of the tensor data to be synchronized in order to generate the descriptor synchronization instruction.

In a possible implementation method, the data characteristics of the tensor data to be synchronized may include information such as the shape, source, and address of the tensor data. For example, the tensor data may be from a K-th sender (a K-th processor), the tensor data may be from an operation result of a convolution operation numbered 200, the address of the tensor data may be a specific address area (for example, an address ADDRO-ADDR127), and the shape of the tensor data may be a specified shape (for example, the tensor data may be a 20* 10 two-dimensional tensor). Those skilled in the art can set the data characteristics of the tensor data to be synchronized according to the actual situation, which is not limited in the present disclosure.

In a possible implementation method, according to the data characteristics, the first processor may find the tensor data to be synchronized, and determine the descriptor of the tensor data to be synchronized, for example, the first processor may directly obtain a descriptor or register a corresponding descriptor. According to the descriptor of the tensor data to be synchronized, the first processor may generate and send a descriptor synchronization instruction to instruct the second processor to synchronize the tensor data.

By adopting the above-mentioned data synchronization method provided by the present disclosure, the descriptor of the tensor data to be synchronized can be determined according to the data characteristics in the request instruction, so as to achieve the synchronization of the tensor data. In this way, there is no need to transmit tensor data itself during synchronization, which reduces the amount of transmitted data and synchronization overhead, and improves processing efficiency.

In a possible implementation method, the descriptor synchronization instruction includes the content of the descriptor of the tensor data to be synchronized. The step S11 may include: when a storage address of the tensor data to be synchronized is in a shared storage space, generating the descriptor synchronization instruction according to the content of the descriptor of the tensor data to be synchronized, to instruct the second processor to obtain the tensor data to be synchronized from the shared storage space according to the content of the descriptor of the tensor data to be synchronized.

For example, a plurality of processors (a plurality of cores) may have a shared storage space, for example, an off-chip memory that can be accessed by both the first processor and the second processor. The shared storage space may be a storage space in which a plurality of cores (a plurality of processors) can access data, or a storage space in which some cores (some processors) can access data. The shared storage space for cores may be preset, and the present disclosure does not limit the setting method of the shared storage space.

In a possible implementation method, if the storage address of the tensor data to be synchronized is in the shared storage space, since the second processor may also access data from the shared storage space, the second processor can directly read the tensor data according to the content of the descriptor to synchronize the tensor data. In this case, the descriptor synchronization instruction may include the content of the descriptor of the tensor data to be synchronized, in other words, the descriptor synchronization instruction may be generated according to the content of the descriptor of the tensor data to be synchronized. After receiving the descriptor synchronization instruction, the second processor may parse the instruction to obtain the content of the descriptor; according to the content of the descriptor, the second processor may determine the data address of the tensor data to be synchronized and obtain the tensor data to be synchronized from the shared storage space, thereby achieving the entire synchronization process.

By adopting the above-mentioned data synchronization method provided by the present disclosure, unnecessary data transmission can be avoided, the amount of transmitted data can be reduced, and the synchronization efficiency can be improved.

In a possible implementation method, the step S11 may include:

storing the content of the descriptor of the tensor data to be synchronized to a storage space of synchronized data; and generating the descriptor synchronization instruction according to the address of the content of the descriptor in the storage space of synchronized data to instruct the second processor to obtain the content of the descriptor of the tensor data to be synchronized from the storage space of synchronized data.

For example, a plurality of processors (a plurality of cores) may have a storage space of synchronized data which is dedicated to store the synchronized data. The storage space of synchronized data may be the above-mentioned shared storage space, or a part of the shared storage space, or a storage space different from the shared storage space, which is not limited in the present disclosure.

In a possible implementation method, the storage space of synchronized data may be a storage space in which a plurality of cores (a plurality of processors) can access synchronized data, or a storage space in which part of cores (part of processors) can access synchronized data, which is not limited in the present disclosure.

In a possible implementation method, after determining the descriptor of the tensor data to be synchronized, the first processor may store the content of the descriptor in the storage space of synchronized data, and generate and send the descriptor synchronization instruction according to the address of the content of the descriptor in the storage space of synchronized data. After receiving the descriptor synchronization instruction, the second processor may parse the instruction to obtain the storage address of the content of the descriptor; according to the storage address, the second processor may obtain the content of the descriptor of the tensor data to be synchronized from the storage space of synchronized data, and then determine the data address of the tensor data to be synchronized according to the content of the descriptor, and obtain the tensor data to be synchronized, thereby achieving the entire synchronization process.

By adopting the above-mentioned data synchronization method provided by the present disclosure, the amount of data transmitted between processors during synchronization can be further reduced, and synchronization efficiency can be improved.

In a possible implementation method, the step S11 may include:

when the storage address of the tensor data to be synchronized is in a non-shared storage space, storing the tensor data to be synchronized to the shared storage space; generating the descriptor of the tensor data to be synchronized according to the address of the tensor data to be synchronized in the shared storage space; and generating the descriptor synchronization instruction according to the content of the descriptor of the tensor data to be synchronized, to instruct the second processor to obtain the tensor data to be synchronized from the shared storage space according to the content of the descriptor of the tensor data to be synchronized.

For example, the first processor may have a non-shared storage space in which the first processor may access data, and the second processor cannot access the non-shared storage space of the first processor, so that the second processor cannot access data in the non-shared storage space. If the storage address of the tensor data to be synchronized is in the non-shared storage space, the second processor cannot directly obtain the tensor data. In this case, the first processor may transfer the tensor data to be synchronized and store the tensor data to be synchronized to the shared storage space, so that the second processor can access the tensor data. After the tensor data to be synchronized is transferred and stored into the shared storage space, if a descriptor indicating the tensor data to be synchronized is not registered in the first processor, or a descriptor indicating the tensor data in the non-shared storage space is registered and the descriptor cannot be modified (for example, the descriptor is being operated), the first processor may generate a descriptor of the tensor data to be synchronized, in other words, the first processor may register a new descriptor to indicate the tensor data in the shared storage space.

In a possible implementation method, after generating the descriptor, the first processor may generate the descriptor synchronization instruction according to the content of the descriptor. After receiving the descriptor synchronization instruction, the second processor may parse the instruction to obtain the content of the descriptor; according to the content of the descriptor, the second processor may determine the data address of the tensor data to be synchronized, and obtain the tensor data to be synchronized from the shared storage space, thereby achieving the entire synchronization process.

By adopting the above-mentioned data synchronization method provided by the present disclosure, the tensor data to be synchronized in the non-shared storage space can be actively transferred and stored into the shared storage space, so that the second processor can obtain the tensor data to be synchronized, thereby reducing the amount of data transmitted between processors during synchronization, and improving the synchronization efficiency.

In a possible implementation method, the step S11 may include:

when the storage address of the tensor data to be synchronized is in the non-shared storage space, storing the tensor data to be synchronized to the shared storage space;

modifying the descriptor of the tensor data to be synchronized according to the address of the tensor data to be synchronized in the shared storage space; and

generating the descriptor synchronization instruction according to the content of the descriptor of the tensor data to be synchronized to instruct the second processor to obtain the tensor data to be synchronized from the shared storage space according to the content of the descriptor of the tensor data to be synchronized.

For example, similar to the above description, if the tensor data to be synchronized is in the non-shared storage space of the first processor, the first processor may transfer the tensor data to be synchronized and store the tensor data to be synchronized into the shared storage space. After the tensor data to be synchronized is transferred and stored into the shared storage space, if a descriptor indicating the tensor data in the non-shared storage space has been registered in the first processor and the descriptor can be modified (for example, the descriptor has not being operated), the first processor may directly modify the descriptor of the tensor data to be synchronized, so that the descriptor indicates the tensor data in the shared storage space.

In a possible implementation method, after modifying the descriptor, the first processor may generate the descriptor synchronization instruction according to the content of the descriptor. After receiving the descriptor synchronization instruction, the second processor may parse the instruction to obtain the content of the descriptor; according to the content of the descriptor, the second processor may determine the data address of the tensor data to be synchronized, and obtain the tensor data to be synchronized from the shared storage space, thereby achieving the entire synchronization process.

By adopting the above-mentioned data synchronization method provided by the present disclosure, the tensor data to be synchronized in the non-shared storage space can be actively transferred and stored into the shared storage space, which could reduce the amount of data transmitted between processors during synchronization and improve the synchronization efficiency; in addition, the first processor does not need to create a new descriptor, which could save limited descriptor resources.

Fig. 2 shows a flowchart of a data synchronization method according to an embodiment of the present disclosure. As shown in Fig. 2, the data synchronization method includes:

in a step S21, parsing a descriptor synchronization instruction received from a first processor to obtain a descriptor of tensor data to be synchronized, where the descriptor synchronization instruction includes an identifier of the descriptor and/or content of the descriptor, and the descriptor is used to indicate a shape of the tensor data to be synchronized; and

in a step S22, obtaining the tensor data to be synchronized according to the descriptor of the tensor data to be synchronized.

For example, the first processor (sender) can actively execute data synchronization on a second processor (receiver). For example, when the first processor completes an operation and obtain an operation result (tensor data), the first processor actively executes data synchronization on the second processor that needs to use the operation result.

In a possible implementation method, when receiving the descriptor synchronization instruction from the first processor, the second processor may parse the descriptor synchronization instruction to obtain the descriptor of the tensor data to be synchronized (such as the identifier of the descriptor and/or content of the descriptor).

In a possible implementation method, if the descriptor synchronization instruction includes only the identifier of the descriptor, the second processor may internally search for the content of the descriptor corresponding to the identifier of the descriptor, and then obtain the tensor data to be synchronized according to the content of the descriptor, thereby achieving synchronization of the tensor data.

In a possible implementation method, if the descriptor synchronization instruction includes the identifier of the descriptor and the content of the descriptor, the second processor may search for a descriptor corresponding to an identifier of a descriptor, and update original content of the descriptor according to the content of the descriptor in the descriptor synchronization instruction; the second processor may further obtain the tensor data to be synchronized according to the updated content of the descriptor, thereby achieving synchronization of the tensor data.

In a possible implementation method, if the descriptor synchronization instruction includes the content of the descriptor, the second processor may register a descriptor indicating the tensor data to be synchronized according to the content of the descriptor, and obtain the tensor data to be synchronized according to the content of the descriptor, thereby achieving synchronization of tensor data.

According to the data synchronization method provided in the embodiment of the present disclosure, when data needs to be synchronized, by setting a descriptor indicating the shape of tensor data, a descriptor synchronization instruction may be obtained according to a descriptor of tensor data to be synchronized and send to a second processor to instruct the second processor to obtain the tensor data to be synchronized according to the descriptor synchronization instruction, thereby reducing synchronization overhead, reducing the complexity of data synchronization, and improving the efficiency of data synchronization.

In a possible implementation method, the descriptor synchronization instruction includes the content of the descriptor of the tensor data to be synchronized. The step S22 may include:
obtaining the tensor data to be synchronized from a shared storage space according to the content of the descriptor of the tensor data to be synchronized.

For example, if the storage address of the tensor data to be synchronized is in the shared storage space, the second processor may access the data from the shared storage space. In this case, the descriptor synchronization instruction may include the content of the descriptor of the tensor data to be synchronized. After receiving the descriptor synchronization instruction, the second processor may parse the instruction to obtain the content of the descriptor; according to the content of the descriptor, the second processor may determine the data address of the tensor data to be synchronized and obtain the tensor data to be synchronized from the shared storage space, thereby achieving the entire synchronization process.

By adopting the above-mentioned data synchronization method provided by the present disclosure, unnecessary data transmission can be avoided, the amount of transmitted tensor data can be reduced, and the synchronization efficiency can be improved.

In a possible implementation method, the descriptor synchronization instruction includes an address of the content of the descriptor of the tensor data to be synchronized in a storage space of synchronized data. The step S22 may include:

obtaining the content of the descriptor of the tensor data to be synchronized from the storage space of synchronized data according to the address of the content of the descriptor of the tensor data to be synchronized in the storage space of synchronized data; and
obtaining the tensor data to be synchronized from the shared storage space according to the content of the descriptor of the tensor data to be synchronized.

For example, after determining the descriptor of the tensor data to be synchronized, the first processor may store the content of the descriptor in the storage space of synchronized data, and generate and send the descriptor synchronization instruction according to the address of the content of the descriptor in the storage space of synchronized data. After receiving the descriptor synchronization instruction, the second processor may parse the instruction to obtain the storage address of the content of the descriptor; according to the storage address, the second processor may obtain the content of the descriptor of the tensor data to be synchronized from the storage space of synchronized data, and then determine the data address of the tensor data to be synchronized according to the content of the descriptor, and obtain the tensor data to be synchronized, thereby achieving the entire synchronization process.

By adopting the above-mentioned data synchronization method provided by the present disclosure, the amount of data transmitted between processors during synchronization can be further reduced, and synchronization efficiency can be improved.

Fig. 3 shows a flowchart of a data synchronization method according to an embodiment of the present disclosure. The data synchronization method is applied to the second processor. As shown in Fig. 3, the data synchronization method includes:

in a step S31, when there is tensor data to be synchronized, generating a descriptor synchronization request instruction, where the descriptor synchronization request instruction is used to instruct a first processor to send a descriptor of the tensor data to be synchronized according to the descriptor synchronization request instruction, and the descriptor is used to indicate the shape of the tensor data to be synchronized; and

in a step S32, sending the descriptor synchronization request instruction to the first processor.

For example, when there is tensor data to be synchronized in a second processor, the descriptor synchronization request instruction may be sent to the first processor, so as to obtain the tensor data to be synchronized. The second processor may generate the descriptor synchronization request instruction according to the information of the tensor data to be synchronized, such as an identifier of the descriptor indicating the tensor data to be synchronized, and data characteristics of the tensor data to be synchronized. The present disclosure does not limit the specific content of the descriptor synchronization request instruction. According to the information in the descriptor synchronization request instruction, the first processor may determine the descriptor of the tensor data to be synchronized, and then generate the descriptor synchronization instruction.

By adopting the above-mentioned data synchronization method provided by the present disclosure, a synchronization request may be initiated when synchronization is needed to improve the efficiency of data synchronization.

In a possible implementation method, the descriptor synchronization request instruction includes an identifier of the descriptor and/or data characteristics of the tensor data to be synchronized, so that the first processor can determine the tensor data to be synchronized. The data characteristics of the tensor data may include information such as the shape, source, and address of the tensor data. Those skilled in the art can set the data characteristics of the tensor data to be synchronized according to the actual situation, which is not limited in the present disclosure.

In a possible implementation method, the data synchronization method further includes:

parsing the descriptor synchronization instruction received from the first processor to obtain the descriptor of tensor data to be synchronized, where the descriptor synchronization instruction includes the identifier of the descriptor and/or the content of the descriptor; and

obtaining the tensor data to be synchronized according to the descriptor of the tensor data to be synchronized.

For example, if descriptors indicating the tensor data have been registered on both the first processor and the second processor, and the identifiers of the descriptors are the same or correspond to each other, the descriptor synchronization request instruction may include the identifiers of the descriptors, for example, when an identifier of a descriptor is TR1, the descriptor synchronization request instruction is represented as Receive TR1. The first processor may parse the descriptor synchronization request instruction received from the second processor to obtain the identifier of the descriptor, and then determine the descriptor of the tensor data to be synchronized according to the identifier of the descriptor, so as to generate the descriptor synchronization instruction.

In a possible implementation method, when receiving the descriptor synchronization instruction, the second processor may parse the descriptor synchronization instruction to obtain the descriptor of the tensor data to be synchronized (the identifier of the descriptor and/or the content of the descriptor). If the descriptor synchronization instruction includes only the identifier of the descriptor, the second processor may internally search for the content of the descriptor corresponding to the identifier of the descriptor, and then obtain the tensor data to be synchronized according to the content of the descriptor, thereby achieving synchronization of the tensor data.

In a possible implementation method, if the descriptor synchronization instruction includes the identifier of the descriptor and the content of the descriptor, the second processor may search for the descriptor corresponding to the identifier of the descriptor, and update original content of the descriptor according to the content of the descriptor in the descriptor synchronization instruction; the second processor may further obtain the tensor data to be synchronized according to the updated content of the descriptor, thereby achieving synchronization of the tensor data.

In a possible implementation method, if the descriptor synchronization instruction includes the content of the descriptor, the second processor may register a descriptor indicating the tensor data to be synchronized according to the content of the descriptor, and obtain the tensor data to be synchronized according to the content of the descriptor, thereby achieving synchronization of tensor data.

By adopting the above-mentioned data synchronization method provided by the present disclosure, the complexity of data synchronization can be reduced and the efficiency of data synchronization can be improved.

In a possible implementation method, the descriptor synchronization instruction includes the content of the descriptor of the tensor data to be synchronized. The step of obtaining the tensor data to be synchronized according to the descriptor of the tensor data to be synchronized may include:
obtaining the tensor data to be synchronized from the shared storage space according to the content of the descriptor of the tensor data to be synchronized.

For example, if the storage address of the tensor data to be synchronized is in the shared storage space, the second processor may access the data from the shared storage space. In this case, the descriptor synchronization instruction may include the content of the descriptor of the tensor data to be synchronized. After receiving the descriptor synchronization instruction, the second processor may parse the instruction to obtain the content of the descriptor; according to the content of the descriptor, the second processor may determine the data address of the tensor data to be synchronized and obtain the tensor data to be synchronized from the shared storage space, thereby achieving the entire synchronization process.

By adopting the above-mentioned data synchronization method provided by the present disclosure, unnecessary data transmission can be avoided, the amount of transmitted tensor data can be reduced, and the synchronization efficiency can be improved.

In a possible implementation method, the descriptor synchronization instruction includes an address of the content of the descriptor of the tensor data to be synchronized in a storage space of synchronized data. The steps of obtaining the tensor data to be synchronized according to the descriptor of the tensor data to be synchronized may include:

obtaining the content of the descriptor of the tensor data to be synchronized from the storage space of synchronized data according to the address of the content of the descriptor of the tensor data to be synchronized in the storage space of synchronized data; and
obtaining the tensor data to be synchronized from the shared storage space according to the content of the descriptor of the tensor data to be synchronized.

After determining the descriptor of the tensor data to be synchronized, the first processor may store the content of the descriptor in the storage space of synchronized data, and generate and send the descriptor synchronization instruction according to the address of the content of the descriptor in the storage space of synchronized data. After receiving the descriptor synchronization instruction, the second processor may parse the instruction to obtain the storage address of the content of the descriptor; according to the storage address, the second processor may obtain the content of the descriptor of the tensor data to be synchronized from the storage space of synchronized data, and then determine the data address of the tensor data to be synchronized according to the content of the descriptor, and obtain the tensor data to be synchronized, thereby achieving the entire synchronization process.

By adopting the above-mentioned data synchronization method provided by the present disclosure, the amount of data transmitted between processors during synchronization can be further reduced, and synchronization efficiency can be improved.

In a possible implementation method, the identifier and content of the descriptor can be stored in the descriptor storage space, which may be a storage space in an internal memory of the processor (such as a register, an on-chip SRAM or other medium cache, *etc.*). The data storage space of the tensor data indicated by the descriptor may be a storage space in an internal memory of the processor (*e.g.,* an on-chip cache) or a storage space in an external memory (an off-chip memory) connected to the processor. The data address in the data storage space may be an actual physical address or a virtual address. The present disclosure does not limit a position of the descriptor storage space and a position of the data storage space, and the type of the data address.

In a possible implementation method, the identifier and content of the descriptor and the tensor data indicated by the descriptor can be located in a same area, for example, a continuous area of an on-chip cache can be used to store the related content of the descriptor, where an address of the area is ADDR0-ADDR1023. An address ADDR0-ADDR31 can be used to store the identifier of the descriptor, an address ADDR32-ADDR63 can be used to store the content of the descriptor, and an address ADDR64-ADDR1023 can be used to store the tensor data indicated by the descriptor. The address ADDR is not limited to 1 bit or 1 byte, and the ADDR is an address unit used to represent an address. Those skilled in the art can determine the storage area and the address thereof according to actual situations, which is not limited in the present disclosure.

In a possible implementation method, the identifier, content of the descriptor and the tensor data indicated by the descriptor can be stored separately in different areas of an internal memory. For example, a register can be used as the descriptor storage space to store the identifier and content of the descriptor, and an on-chip cache can be used as the data storage space to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register can be used to indicate the identifier of the descriptor. For example, if the serial number of the register is 0, the identifier of the stored descriptor is 0. When the descriptor in the register is valid, an area can be allocated in a caching space (such as creating a tensor cache unit for each tensor data in the cache) according to the size of the tensor data indicated by the descriptor for storing the tensor data. It should be understood that a preset caching space may be also used to store the tensor data, which is not limited in the present disclosure.

In a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the data storage space corresponding to the descriptor may be a fixed address. For example, a separate data storage space may be provided for the tensor data, and a start address of each tensor data in the data storage space corresponds to the identifier of the descriptor. In this case, the processor can determine the data address of the tensor data according to the content of the descriptor.

In a possible implementation method, when the data address of the data storage space corresponding to the descriptor is a variable address, the descriptor may be also used to indicate the address of N-dimensional tensor data, where the content of the descriptor may further include at least one address parameter representing the address of the tensor data. For example, if the tensor data is a 3-dimenisonal data, when the descriptor points to the address of the tensor data, the content of the descriptor may include an address parameter indicating the address of the tensor data, such as a start address of the tensor data; or the content of the descriptor may include a plurality of address parameters of the address of the tensor data, such as a start address + an address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space of the tensor data, where the base address may be different according to the change of the datum point. The present disclosure does not limit the selection of the datum point.

In a possible implementation method, the base address may include a start address of the data storage space. When the datum point of the descriptor is a first data block of the data storage space, the base address of the descriptor is the start address of the data storage space. When the datum point of the descriptor is other data than the first data block in the data storage space, the base address of the descriptor is the physical address of the data block in the data storage space.

In a possible implementation method, the shape parameter of the tensor data includes at least one of the followings: a size of the data storage space of the tensor data in at least one of N dimensions, a size of the storage area in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is a 3-dimensional data, the descriptor can use a coordinate (x, y, z) to represent the shape of the tensor data, and the data description position of the tensor data can be represented by the coordinate (x, y, z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

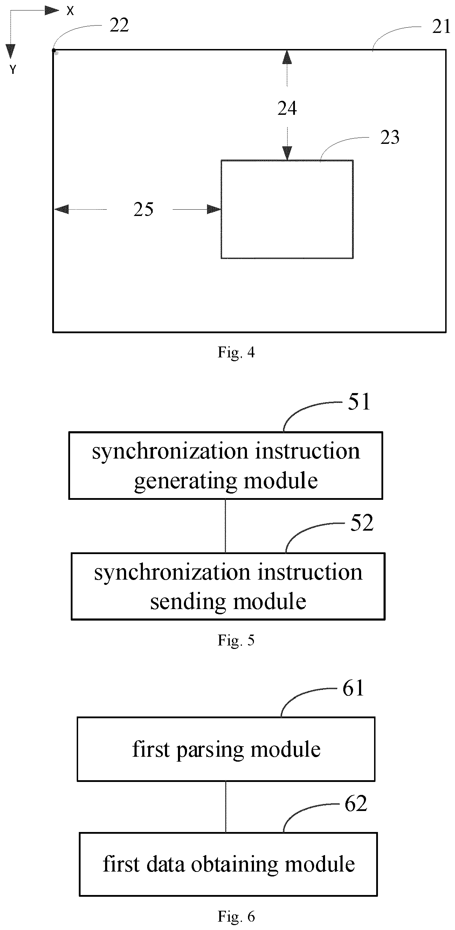

Fig. 4 shows a schematic diagram of a data storage space of a data synchronization method according to an embodiment of the present disclosure. As shown in Fig. 4, a data storage space 21 stores a 2-dimensional data in a row-first manner, where the data storage space 21 can be represented by (x, y) (where the X axis extends horizontally to the right, and the Y axis extends vertically down), a size in the X axis direction (a size of each row) is ori_x (which is not shown in the figure), a size in the Y axis direction (total count of rows) is ori_y (which is not shown in the figure), and a start address PA_start (a base address) of the data storage space 21 is a physical address of a first data block 22. A data block 23 is part of the data in the data storage space 21, where an offset 25 of the data block 23 in the X axis direction is represented as offset_x, an offset 24 of the data block 23 in the Y axis direction is represented as offset_y, the size in the X axis direction is represented as size x, and the size in the Y axis direction is represented as size_y.

In a possible implementation method, when the descriptor is used to define the data block 23, the datum point of the descriptor may be a first data block of the data storage space 21, the base address of the descriptor is the start address PA_start of the data storage space 21, and then the content of the descriptor of the data block 23 can be determined according to the size ori_x of the data storage space 21 in the X axis, the size ori_y in the Y axis, the offset offset_y of the data block 23 in the Y axis direction, the offset offset_x of the data block 23 in the X axis direction, the size size_x in the X axis direction, and the size size_y in the Y axis direction.

In a possible implementation method, the following formula (1) can be used to represent the content of the

descriptor:

$$\begin{cases} \text{X direction: } ori\_x, offset\_x, size\_x \\ \text{Y direction: } ori\_y, offset\_y, size\_y \\ \qquad\quad PA\_start \end{cases} \qquad (1)$$

It should be understood that although the descriptor describes a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the data storage space and the position of at least two vertices at diagonal positions in N dimensions relative to the datum point.

For example, the content of the descriptor of the data block 23 in Fig. 4 can be determined according to the base address PA_base of the datum point of the descriptor in the data storage space and the position of two vertices at diagonal positions relative to the datum point. First, the datum point of the descriptor and the base address PA_base in the data storage space are determined, for example, a piece of data (for example, a piece of data at position (2, 2)) in the data storage space 21 is selected as a datum point, and a physical address of the selected data in the data storage space is used as the base address PA_base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x_max, y_max); and then the content of the descriptor of the data block 23 can be determined according to the base address PA_base, the relative position (x min, y min) of the top left vertex, and the relative position (x_max, y_max) of the bottom right vertex.

In a possible implementation method, the following formula (2) can be used to represent the content of the descriptor:

$$\begin{cases} \text{X direction: } x\_min, x\_max \\ \text{Y direction: } y\_min, y\_max \\ \qquad\quad PA\_base \end{cases} \qquad (2)$$

It should be understood that although the top left vertex and the bottom right vertex are used to determine the content of the descriptor in the above-mentioned example, those skilled in the art may set at least two specific vertices according to actual needs, which is not limited in the present disclosure.

In a possible implementation method, the content of the descriptor of the tensor data can be determined according to the base address of the datum point of the descriptor in the data storage space and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} f(x, \; y, \; z) \\ \quad PA\_base \end{cases} \qquad (3)$$

It should be understood that those skilled in the art can set the mapping relationship between the data description position and the data address according to actual situations, which is not limited in the present disclosure.

When the formula (1) is used to represent the content of the descriptor, for any datum point in the tensor data, the data description position is set to (x_q, y_q), and then the data address $PA2_{(x,y)}$ of the data in the data storage space can be determined using the following formula (4):

$$PA2_{(x,y)} = PA\_start + \left( offset\_y + y_q - 1 \right) * ori\_x + \left( offset\_x + x_q \right) \quad (4)$$

By adopting the above-mentioned method provided by the present disclosure, the processor may compute the data address of the tensor data indicated by the descriptor in the data storage space according to the content of the descriptor, and then execute processing (data operation, data synchronization, *etc.)* according to the address, Therefore, the complexity of data access can be reduced, and the processing efficiency of the processor can be improved.

Fig. 5 shows a block diagram of a data synchronization apparatus according to an embodiment of the present disclosure. The data synchronization apparatus is applied to a first processor. As shown in Fig. 5, the data synchronization apparatus may include:

a synchronization instruction generating module 51 configured to generate a descriptor synchronization instruction according to a descriptor of tensor data to be synchronized, where the descriptor synchronization instruction includes an identifier of the descriptor and/or content of the descriptor, and the descriptor is used to indicate a shape of the tensor data to be synchronized; and
a synchronization instruction sending module 52 configured to send the descriptor synchronization instruction to a second processor, where the descriptor synchronization instruction is used to instruct the second processor to obtain the tensor data to be synchronized according to the descriptor synchronization instruction.

In a possible implementation method, the data synchronization apparatus may further include: a first descriptor determining module configured to determine the descriptor of the tensor data to be synchronized according to a descriptor synchronization request instruction received from the second processor.

In a possible implementation method, the descriptor synchronization request instruction includes the identifier of the descriptor, where the first descriptor determining module includes:

a first parsing sub-module configured to parse the descriptor synchronization request instruction to obtain the identifier of the descriptor; and
a first determining sub-module configured to determine the descriptor of the tensor data to be synchronized according to the identifier of the descriptor.

In a possible implementation method, the descriptor synchronization request instruction includes data characteristics of the tensor data to be synchronized, where the first descriptor determining module includes:

a second parsing sub-module configured to parse the descriptor synchronization request instruction to obtain data characteristics of tensor data to be synchronized; and
a second determining sub-module configured to determine the descriptor of the tensor data to be synchronized according to the data characteristics of the tensor data to be synchronized.

In a possible implementation method, the descriptor synchronization instruction includes the content of the descriptor of the tensor data to be synchronized, where the synchronization instruction generating module includes:
a first generating sub-module configured to generate the descriptor synchronization instruction according to the content of the descriptor of the tensor data to be synchronized when the storage address of the tensor data to be synchronized is in the shared storage space to instruct the second processor to obtain the tensor data to be synchronized from the shared storage space according to the content of the descriptor of the tensor data to be synchronized.

In a possible implementation method, the synchronization instruction generating module includes:

a first storage sub-module configured to store the content of the descriptor of the tensor data to be synchronized into the storage space of synchronized data; and
a second generating sub-module configured to generate the descriptor synchronization instruction according to the address of the content of the descriptor in the storage space of synchronized data to instruct the second processor to obtain the content of the descriptor of the tensor data to be synchronized from the storage space of synchronized data.

In a possible implementation method, the synchronization instruction generating module includes:

a second storage sub-module configured to store the tensor data to be synchronized to the shared storage space when the storage address of the tensor data to be synchronized is in a non-shared storage space;
a descriptor generating sub-module configured to generate the descriptor of the tensor data to be synchronized according to the address of the tensor data to be synchronized in shared storage space; and
a third generating sub-module configured to generate the descriptor synchronization instruction according to the content of the descriptor of the tensor data to be synchronized to instruct the second processor to obtain the tensor data to be synchronized from the shared storage space according to the content of the descriptor of the tensor data to be synchronized.

In a possible implementation method, the synchronization instruction generating module includes:

a third storage sub-module configured to store the tensor data to be synchronized to the shared storage space when the storage address of the tensor data to be synchronized is in the non-shared storage space;
a descriptor modification sub-module configured to modify the descriptor of the tensor data to be synchronized according to the address of the tensor data to be synchronized in the shared storage space; and
a fourth generating sub-module configured to generate the descriptor synchronization instruction according to the content of the descriptor of the tensor data to be synchronized to instruct the second processor to obtain the tensor data to be synchronized from the shared storage space according to the content of the descriptor of the tensor data to be synchronized.

Fig. 6 shows a block diagram of a data synchronization apparatus according to an embodiment of the present disclosure. The data synchronization apparatus is applied to a second processor. As shown in Fig. 6, the data synchronization apparatus includes:

a first parsing module 61 configured to parse a descriptor synchronization instruction received from a first processor to obtain a descriptor of tensor data to be synchronized, where the descriptor synchronization instruction includes an identifier of the descriptor and/or content of the descriptor, and the descriptor is used to indicate a shape of the tensor data to be synchronized; and
a first data obtaining module 62 configured to obtain the tensor data to be synchronized according to the descriptor of the tensor data to be synchronized.

In a possible implementation method, the descriptor synchronization instruction includes the content of the descriptor of the tensor data to be synchronized, where the first data obtaining module includes:
a first data obtaining sub-module configured to obtain the tensor data to be synchronized from a shared storage space according to the content of the descriptor of the tensor data to be synchronized.

In a possible implementation method, the descriptor synchronization instruction includes an address of the content of the descriptor of the tensor data to be synchronized in a storage space of synchronized data, where the first data obtaining module includes:

a first content obtaining sub-module configured to obtain the content of the descriptor of the tensor data to be synchronized from the storage space of synchronized data according to the address of the content of the descriptor of the tensor data to be synchronized in the storage space of synchronized data; and
a second data obtaining sub-module configured to obtain the tensor data to be synchronized from the shared storage space according to the content of the descriptor of the tensor data to be synchronized.

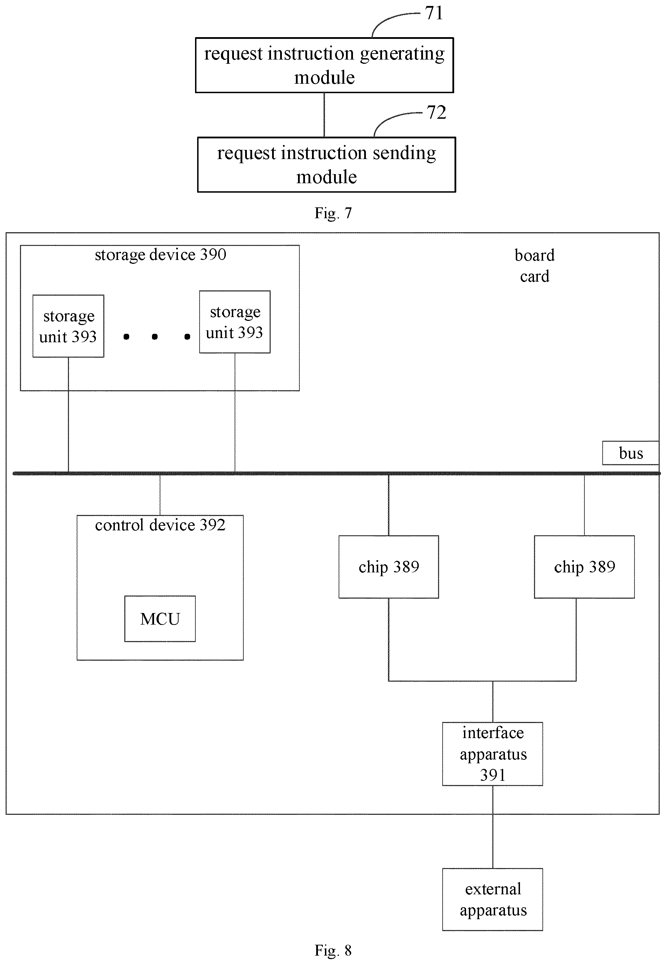

Fig. 7 shows a block diagram of a data synchronization apparatus according to an embodiment of the present disclosure. The data synchronization apparatus is applied to a second processor. As shown in Fig. 7, the data synchronization apparatus includes:

a request instruction generating module 71 configured to generate a descriptor synchronization request instruction when there is tensor data to be synchronized, where the descriptor synchronization request instruction is used to instruct a first processor to send a descriptor of tensor data to be synchronized according to the descriptor synchronization request instruction, and the descriptor is used to indicate a shape of the tensor data to be synchronized; and
a request instruction sending module 72 configured to send the descriptor synchronization request instruction to the first processor.

In a possible implementation method, the descriptor synchronization request instruction includes an identifier of the descriptor and/or data characteristics of the tensor data to be synchronized.
In a possible implementation method, the data synchronization apparatus includes:

a second parsing module configured to parse the descriptor synchronization instruction received from the first processor to obtain the descriptor of the tensor data to be synchronized, where the descriptor synchronization instruction includes the identifier of the descriptor and/or the content of the descriptor; and
a second data obtaining module configured to obtain the tensor data to be synchronized according to the descriptor of the tensor data to be synchronized.

In a possible implementation method, the descriptor synchronization instruction includes the content of the descriptor of the tensor data to be synchronized, where the second data obtaining module includes:
a third data obtaining sub-module configured to obtain the tensor data to be synchronized from the shared storage space according to the content of the descriptor of the tensor data to be synchronized.

In a possible implementation method, the descriptor synchronization instruction includes the address of the content of the descriptor of the tensor data to be synchronized in the storage space of synchronized data, where the second data obtaining module includes:

a second content obtaining sub-module configured to obtain the content of the descriptor of the tensor data to be synchronized from the storage space of synchronized data according to the address of the content of the descriptor of the tensor data to be synchronized in the storage space of synchronized data; and

a fourth data obtaining sub-module configured to obtain the tensor data to be synchronized from the shared storage space according to the content of the descriptor of the tensor data to be synchronized.

In a possible implementation method, the present disclosure further provides an artificial intelligence chip including the above-mentioned data synchronization apparatus.

In a possible implementation method, the present disclosure further provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transmission between the artificial intelligence chip and an external equipment; and the control device is configured to monitor the state of the artificial intelligence chip.

The embodiments of the present disclosure have been described above, and the above description is exemplary, not exhaustive, and is not limited to the disclosed embodiments. Without departing from the scope of the described embodiments, many modifications and changes are obvious to those ordinary skilled in the art. The choice of terms used herein is intended to best explain the principles, practical applications, or improvements to technologies in the market of the embodiments, or to enable other ordinary skilled in the art to understand the embodiments disclosed herein.

## Claims

1.  A data synchronization method, implemented by a first processor, comprising:

    determining a descriptor of to-be-synchronized tensor data, wherein the descriptor describes a shape of the tensor data;
    generating a descriptor synchronization instruction according to the descriptor of the tensor data, where the descriptor synchronization instruction includes an identifier of the descriptor and/or content of the descriptor, and
    sending the descriptor synchronization instruction to a second processor, where the descriptor synchronization instruction is configured to instruct the second processor to obtain the tensor data according to the descriptor synchronization instruction,
    thereby achieving a synchronization of tensor data between the first processor and the second processor.

2.  The data synchronization method of claim 1, further comprising:
    determining the descriptor of the tensor data according to a descriptor synchronization request instruction received from the second processor.

3.  The data synchronization method of claim 2, wherein the descriptor synchronization request instruction includes the identifier of the descriptor, and the determining the descriptor of the tensor data according to a descriptor synchronization request instruction received from the second processor includes:

    parsing the descriptor synchronization request instruction to obtain the identifier of the descriptor, and
    determining the descriptor of the tensor data according to the identifier of the descriptor.

4.  The data synchronization method of claim 2, wherein the descriptor synchronization request instruction includes data characteristics of the tensor data, where the determining the descriptor of the tensor data according to a descriptor synchronization request instruction received from the second processor includes:

parsing the descriptor synchronization request instruction to obtain the data characteristics of the tensor data, and according to the data characteristics of the tensor data, determining the descriptor of the tensor data.

5. The data synchronization method of any one of claims 1-4, wherein the descriptor synchronization instruction includes the content of the descriptor of the tensor data, and the generating a descriptor synchronization instruction according to a descriptor of tensor data includes:
when a storage address of the tensor data is in a shared storage space, generating the descriptor synchronization instruction according to the content of the descriptor of the tensor data to instruct the second processor to obtain the tensor data from the shared storage space according to the content of the descriptor of the tensor data.

6. The data synchronization method of any one of claims 1-4, wherein the generating a descriptor synchronization instruction according to a descriptor of the tensor data includes:

when the storage address of the tensor data is in a non-shared storage space, storing the tensor data to the shared storage space,
generating the descriptor of the tensor data according to the address of the tensor data in the shared storage space, and
generating the descriptor synchronization instruction according to the content of the descriptor of the tensor data to instruct the second processor to obtain the tensor data from the shared storage space according to the content of the descriptor of the tensor data.

7. A data synchronization method, implemented by a second processor, comprising:

parsing a descriptor synchronization instruction received from a first processor to obtain a descriptor of to-be-synchronized tensor data, where the descriptor synchronization instruction includes an identifier of the descriptor and/or content of the descriptor, and the descriptor is used to indicate a shape of the tensor data, and
obtaining the tensor data according to the descriptor of the tensor data,
thereby achieving a synchronization of tensor data between the first processor and the second processor.

8. The data synchronization method of claim 7, wherein the descriptor synchronization instruction includes the content of the descriptor of the tensor data, and the obtaining the tensor data according to the descriptor of the tensor data includes:
obtaining the tensor data from a shared storage space according to the content of the descriptor of the tensor data.

9. The data synchronization method of claim 7, wherein the descriptor synchronization instruction includes an address of the content of the descriptor of the tensor data in a storage space of synchronized data, and the obtaining the tensor data according to the descriptor of the tensor data includes:

obtaining the content of the descriptor of the tensor data from the storage space of synchronized data according to the address of the content of the descriptor of the tensor data in the storage space of synchronized data, and
obtaining the tensor data from the shared storage space according to the content of the descriptor of the tensor data.

10. The data synchronization method of any of claims 7 to 9,

when there is tensor data to be synchronized, generating a descriptor synchronization request instruction, where the descriptor synchronization request instruction is used to instruct a first processor to send a descriptor of the tensor data according to the descriptor synchronization request instruction, and the descriptor is used to indicate a shape of the tensor data, and
sending the descriptor synchronization request instruction to the first processor.

11. The data synchronization method of claim 10, wherein the descriptor synchronization request instruction includes an identifier of the descriptor and/or data characteristics of the tensor data.

12. A data synchronization apparatus, comprising means for carry out the method of any of claims 1 to 11.

13. An artificial intelligence chip comprising the data synchronization apparatus of claim 12.

**14.** An electronic device comprising the artificial intelligence chip of claim 13.

**15.** A board card comprising a storage device, an interface apparatus, a control device, and the artificial intelligence chip of claim 13, wherein

the artificial intelligence chip is connected to the storage device, the control device, and the interface apparatus, respectively,
the storage device is configured to store data,
the interface apparatus is configured to implement data transmission between the artificial intelligence chip and an external equipment, and
the control device is configured to monitor state of the artificial intelligence chip.

**Patentansprüche**

**1.** Datensynchronisationsverfahren, umgesetzt durch einen ersten Prozessor, umfassend:

Bestimmen eines Deskriptors von zu synchronisierenden Tensordaten, wobei der Deskriptor eine Form der Tensordaten beschreibt;
Erzeugen eines Deskriptor-Synchronisationsbefehls gemäß dem Deskriptor der Tensordaten, wobei der Deskriptor-Synchronisationsbefehl eine Kennung des Deskriptors und/oder Inhalt des Deskriptors enthält, und
Senden des Deskriptor-Synchronisationsbefehls an einen zweiten Prozessor, wobei der Deskriptor-Synchronisationsbefehl dazu konfiguriert ist, den zweiten Prozessor anzuweisen, die Tensordaten gemäß dem Deskriptor-Synchronisationsbefehl zu erhalten,
wodurch eine Synchronisation von Tensordaten zwischen dem ersten Prozessor und dem zweiten Prozessor erreicht wird.

**2.** Datensynchronisationsverfahren nach Anspruch 1, ferner umfassend:
Bestimmen des Deskriptors der Tensordaten gemäß einem Deskriptor-Synchronisationsanforderungsbefehl, der von dem zweiten Prozessor empfangen wird.

**3.** Datensynchronisationsverfahren nach Anspruch 2, wobei der Deskriptor-Synchronisationsanforderungsbefehl die Kennung des Deskriptors enthält und das Bestimmen des Deskriptors der Tensordaten gemäß einem Deskriptor-Synchronisationsanforderungsbefehl, der von dem zweiten Prozessor empfangen wird, Folgendes enthält:

Analysieren des Deskriptor-Synchronisationsanforderungsbefehls, um die Kennung des Deskriptors zu erhalten, und
Bestimmen des Deskriptors der Tensordaten gemäß der Kennung des Deskriptors.

**4.** Datensynchronisationsverfahren nach Anspruch 2, wobei der Deskriptor-Synchronisationsanforderungsbefehl Datenmerkmale der Tensordaten enthält, wobei das Bestimmen des Deskriptors der Tensordaten gemäß einem Deskriptor-Synchronisationsanforderungsbefehl, die von dem zweiten Prozessor empfangen wird, Folgendes enthält:

Analysieren des Deskriptor-Synchronisationsanforderungsbefehls, um die Datenmerkmale der Tensordaten zu erhalten, und
gemäß den Datenmerkmale der Tensordaten, Bestimmen des Deskriptors der Tensordaten.

**5.** Datensynchronisationsverfahren nach einem der Ansprüche 1 bis 4, wobei der Deskriptor-Synchronisationsbefehl den Inhalt des Deskriptors der Tensordaten enthält und das Erzeugen eines Deskriptor-Synchronisationsbefehls gemäß einem Deskriptor von Tensordaten Folgendes enthält:
wenn sich eine Speicheradresse der Tensordaten in einem gemeinsam genutzten Speicherplatz befindet, Erzeugen des Deskriptor-Synchronisationsbefehls gemäß dem Inhalt des Deskriptors der Tensordaten, um den zweiten Prozessor anzuweisen, die Tensordaten aus dem gemeinsam genutzten Speicherplatz gemäß dem Inhalt des Deskriptors der Tensordaten zu erhalten.

**6.** Datensynchronisationsverfahren nach einem der Ansprüche 1 bis 4, wobei das Erzeugen eines Deskriptor-Synchronisationsbefehls gemäß einem Deskriptor der Tensordaten Folgendes enthält:

wenn sich die Speicheradresse der Tensordaten in einem nicht gemeinsam genutzten Speicherplatz befindet, Speichern der Tensordaten in dem gemeinsam genutzten Speicherplatz,

Erzeugen des Deskriptors der Tensordaten gemäß der Adresse der Tensordaten im gemeinsam genutzten Speicherplatz, und

Erzeugen des Deskriptor-Synchronisationsbefehls gemäß dem Inhalt des Deskriptors der Tensordaten, um den zweiten Prozessor anzuweisen, die Tensordaten aus dem gemeinsam genutzten Speicherplatz gemäß dem Inhalt des Deskriptors der Tensordaten zu erhalten.

7. Datensynchronisationsverfahren, umgesetzt durch einen zweiten Prozessor, umfassend:

Analysieren eines von einem ersten Prozessor empfangenen Deskriptor-Synchronisationsbefehls, um einen Deskriptor von zu synchronisierenden Tensordaten zu erhalten, wobei der Deskriptor-Synchronisationsbefehl eine Kennung des Deskriptors und/oder Inhalt des Deskriptors enthält und der Deskriptor verwendet wird, um eine Form der Tensordaten anzuzeigen, und

Erhalten der Tensordaten gemäß dem Deskriptor der Tensordaten,

wodurch eine Synchronisation von Tensordaten zwischen dem ersten Prozessor und dem zweiten Prozessor erreicht wird.

8. Datensynchronisationsverfahren nach Anspruch 7, wobei der Deskriptor-Synchronisationsbefehl den Inhalt des Deskriptors der Tensordaten enthält und das Erhalten der Tensordaten gemäß dem Deskriptor der Tensordaten Folgendes enthält:

Erhalten der Tensordaten aus einem gemeinsam genutzten Speicherplatz gemäß dem Inhalt des Deskriptors der Tensordaten.

9. Datensynchronisationsverfahren nach Anspruch 7, wobei der Deskriptor-Synchronisationsbefehl eine Adresse des Inhalts des Deskriptors der Tensordaten in einem Speicherplatz synchronisierter Daten enthält und das Erhalten der Tensordaten gemäß dem Deskriptor der Tensordaten Folgendes enthält:

Erhalten des Inhalts des Deskriptors der Tensordaten aus dem Speicherplatz synchronisierter Daten gemäß der Adresse des Inhalts des Deskriptors der Tensordaten im Speicherplatz synchronisierter Daten, und

Erhalten der Tensordaten aus dem gemeinsam genutzten Speicherplatz gemäß dem Inhalt des Deskriptors der Tensordaten.

10. Datensynchronisationsverfahren nach einem der Ansprüche 7 bis 9,

wenn zu synchronisierende Tensordaten vorhanden sind, Erzeugen eines Deskriptor-Synchronisationsanforderungsbefehls, wobei der Deskriptor-Synchronisationsanforderungsbefehl verwendet wird, um einen ersten Prozessor anzuweisen, einen Deskriptor der Tensordaten gemäß dem Deskriptor-Synchronisationsanforderungsbefehl zu senden, und der Deskriptor verwendet wird um eine Form der Tensordaten anzugeben, und

Senden des Deskriptor-Synchronisationsanforderungsbefehls an den ersten Prozessor.

11. Datensynchronisationsverfahren nach Anspruch 10, wobei der Deskriptor-Synchronisationsanforderungsbefehl eine Kennung des Deskriptors und/oder Datenmerkmale der Tensordaten enthält.

12. Datensynchronisationseinrichtung, umfassend ein Mittel zum Ausführen des Verfahrens nach einem der Ansprüche 1 bis 11.

13. Chip mit künstlicher Intelligenz, umfassend die Datensynchronisationseinrichtung nach Anspruch 12.

14. Elektronische Vorrichtung, umfassend den Chip mit künstlicher Intelligenz nach Anspruch 13.

15. Steckkarte, umfassend eine Speichervorrichtung, eine Schnittstelleneinrichtung, eine Steuervorrichtung und den Chip mit künstlicher Intelligenz nach Anspruch 13, wobei

der Chip mit künstlicher Intelligenz mit der Speichervorrichtung, der Steuervorrichtung bzw. der Schnittstelleneinrichtung verbunden ist,

die Speichervorrichtung dazu konfiguriert ist, Daten zu speichern,

die Schnittstelleneinrichtung dazu konfiguriert ist, eine Datenübertragung zwischen dem Chip mit künstlicher Intelligenz und einer externen Ausrüstung umzusetzen, und

die Steuervorrichtung dazu konfiguriert ist, einen Zustand des Chips mit künstlicher Intelligenz zu überwachen.

**Revendications**

1. Procédé de synchronisation de données, mis en œuvre par un premier processeur, comprenant :

la détermination d'un descripteur de données tensorielles à synchroniser, dans lequel le descripteur décrit une forme des données tensorielles ;
la génération d'une instruction de synchronisation de descripteur selon le descripteur des données tensorielles, où l'instruction de synchronisation de descripteur comprend un identifiant du descripteur et/ou un contenu du descripteur, et
l'envoi de l'instruction de synchronisation de descripteur à un deuxième processeur, où l'instruction de synchronisation de descripteur est configurée pour instruire au deuxième processeur d'obtenir les données tensorielles selon l'instruction de synchronisation de descripteur,
permettant ainsi la réalisation d'une synchronisation des données tensorielles entre le premier processeur et le deuxième processeur.

2. Procédé de synchronisation de données selon la revendication 1, comprenant en outre :
la détermination du descripteur des données tensorielles selon une instruction de requête de synchronisation de descripteur reçue du deuxième processeur.

3. Procédé de synchronisation de données selon la revendication 2, dans lequel l'instruction de requête de synchronisation de descripteur comprend l'identifiant du descripteur, et la détermination du descripteur des données tensorielles selon une instruction de requête de synchronisation de descripteur reçue du deuxième processeur comprend :

l'analyse de l'instruction de requête de synchronisation de descripteur pour obtenir l'identifiant du descripteur, et
la détermination du descripteur des données tensorielles selon l'identifiant du descripteur.

4. Procédé de synchronisation de données selon la revendication 2, dans lequel l'instruction de requête de synchronisation de descripteur comprend des caractéristiques de données des données tensorielles, où la détermination du descripteur des données tensorielles selon une instruction de requête de synchronisation de descripteur reçue du deuxième processeur comprend :

l'analyse de l'instruction de requête de synchronisation de descripteur pour obtenir les caractéristiques de données des données tensorielles, et
selon les caractéristiques de données des données tensorielles, la détermination du descripteur des données tensorielles.

5. Procédé de synchronisation de données selon l'une quelconque des revendications 1 à 4, dans lequel l'instruction de synchronisation de descripteur comprend le contenu du descripteur des données tensorielles, et la génération d'une instruction de synchronisation de descripteur selon un descripteur de données tensorielles comprend :
lorsqu'une adresse de stockage des données tensorielles se trouve dans un espace de stockage partagé, la génération de l'instruction de synchronisation de descripteur selon le contenu du descripteur des données tensorielles pour instruire au deuxième processeur d'obtenir les données tensorielles à partir de l'espace de stockage partagé selon le contenu du descripteur des données tensorielles.

6. Procédé de synchronisation de données selon l'une quelconque des revendications 1 à 4, dans lequel la génération d'une instruction de synchronisation de descripteur selon un descripteur des données tensorielles comprend :

lorsque l'adresse de stockage des données tensorielles se trouve dans un espace de stockage non partagé, le stockage des données tensorielles dans l'espace de stockage partagé,
la génération du descripteur des données tensorielles selon l'adresse des données tensorielles dans l'espace de stockage partagé, et
la génération de l'instruction de synchronisation de descripteur selon le contenu du descripteur des données tensorielles pour instruire au deuxième processeur d'obtenir les données tensorielles à partir de l'espace de stockage partagé selon le contenu du descripteur des données tensorielles.

7.  Procédé de synchronisation de données, mis en œuvre par un deuxième processeur, comprenant :

    l'analyse d'une instruction de synchronisation de descripteur reçue d'un premier processeur pour obtenir un descripteur de données tensorielles à synchroniser, où l'instruction de synchronisation de descripteur comprend un identifiant du descripteur et/ou du contenu du descripteur, et le descripteur est utilisé pour indiquer une forme des données tensorielles, et
    l'obtention des données tensorielles selon le descripteur des données tensorielles,
    permettant ainsi la réalisation d'une synchronisation des données tensorielles entre le premier processeur et le deuxième processeur.

8.  Procédé de synchronisation de données selon la revendication 7, dans lequel l'instruction de synchronisation de descripteur comprend le contenu du descripteur des données tensorielles, et l'obtention des données tensorielles selon le descripteur des données tensorielles comprend :
    l'obtention des données tensorielles à partir d'un espace de stockage partagé selon le contenu du descripteur des données tensorielles.

9.  Procédé de synchronisation de données selon la revendication 7, dans lequel l'instruction de synchronisation de descripteur comprend une adresse du contenu du descripteur des données tensorielles dans un espace de stockage de données synchronisées, et l'obtention des données tensorielles selon le descripteur des données tensorielles comprend :

    l'obtention du contenu du descripteur des données tensorielles à partir de l'espace de stockage de données synchronisées selon l'adresse du contenu du descripteur des données tensorielles dans l'espace de stockage de données synchronisées, et
    l'obtention des données tensorielles à partir de l'espace de stockage partagé selon le contenu du descripteur des données tensorielles.

10. Procédé de synchronisation de données selon l'une quelconque des revendications 7 à 9,

    lorsqu'il y a des données tensorielles à synchroniser, la génération d'une instruction de requête de synchronisation de descripteur, où l'instruction de requête de synchronisation de descripteur est utilisée pour instruire à un premier processeur d'envoyer un descripteur des données tensorielles selon l'instruction de requête de synchronisation de descripteur, et le descripteur est utilisé pour indiquer une forme des données tensorielles, et
    l'envoi de l'instruction de requête de synchronisation de descripteur au premier processeur.

11. Procédé de synchronisation de données selon la revendication 10, dans lequel l'instruction de requête de synchronisation de descripteur comprend un identifiant du descripteur et/ou des caractéristiques de données des données tensorielles.

12. Appareil de synchronisation de données, comprenant des moyens pour exécuter le procédé selon l'une quelconque des revendications 1 à 11.

13. Puce d'intelligence artificielle, comprenant l'appareil de synchronisation de données selon la revendication 12.

14. Dispositif électronique comprenant la puce d'intelligence artificielle selon la revendication 13.

15. Carte embarquée, comprenant un dispositif de stockage, un appareil d'interface, un dispositif de commande et la puce d'intelligence artificielle selon la revendication 13, dans laquelle

    la puce d'intelligence artificielle est connectée au dispositif de stockage, au dispositif de commande et à l'appareil d'interface, respectivement,
    le dispositif de stockage est configuré pour stocker des données,
    l'appareil d'interface est configuré pour mettre en œuvre une transmission de données entre la puce d'intelligence artificielle et un équipement externe, et
    le dispositif de commande est configuré pour surveiller état de la puce d'intelligence artificielle.

S11

generating a descriptor synchronization instruction according to a descriptor of tensor data to be synchronized

S12

sending the descriptor synchronization instruction to a second processor

Fig. 1

S21

parsing a descriptor synchronization instruction received from a first processor to obtain a descriptor of tensor data to be synchronized

S22

obtaining the tensor data to be synchronized according to the descriptor of the tensor data to be synchronized

Fig. 2

S31

when there is tensor data to be synchronized, generating a descriptor synchronization request instruction

S32

sending the descriptor synchronization request instruction to the first processor

Fig. 3

X

22                                                            21

Y

24

23

25

Fig. 4

51

synchronization instruction
generating module

52

synchronization instruction
sending module

Fig. 5

61

first parsing module

62

first data obtaining module

Fig. 6

71

request instruction generating
module

72

request instruction sending
module

Fig. 7

board
card

storage device 390

storage
unit 393

• • •

storage
unit 393

bus

control device 392

MCU

chip 389

chip 389

interface
apparatus
391

external
apparatus

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016246599 A